# EUROPÄISCHE PATENTSCHRIFT

(11) **EP 2 364 572 B1**
(45) Veröffentlichungstag und Bekanntmachung des Hinweises auf die Patenterteilung: **17.10.2012**
(21) Anmeldenummer: 08875412.2
(22) Anmeldetag: 04.12.2008
(51) Int. Cl.: H05B 37/02, H05B 39/02, H05B 39/04, F21V 23/02

(54) **VERFAHREN ZUM BETREIBEN EINER LAMPE SOWIE ELEKTRONISCHES VORSCHALTGERÄT**
METHOD FOR OPERATING A LAMP AND ELECTRONIC BALLAST
PROCÉDÉ DE FONCTIONNEMENT D'UNE LAMPE ET BALLAST ÉLECTRONIQUE

(43) Veröffentlichungstag der Anmeldung: 14.09.2011
(73) Patentinhaber: OSRAM AG, 81543 München (DE)
(72) Erfinder: ROSSMANITH, Thomas, 80636 München (DE); LIMMER, Walter, 81825 München (DE)
(86) Internationale Anmeldenummer: PCT/EP2008/066753
(87) Internationale Veröffentlichungsnummer: WO 2010/063322

(56) Entgegenhaltungen:
- EP-A2- 1 258 978
- GB-A- 2 432 414

## Beschreibung

### Technisches Gebiet

Die Erfindung betrifft ein Verfahren zum Betreiben einer Lampe mit Hilfe eines elektronischen Vorschaltgeräts. Sie betrifft auch ein elektrisches Vorschaltgerät gemäß dem Oberbegriff des Patentanspruchs 11.

### Stand der Technik

In der Schrift GB 2 432 414 (Samuels) ist eine Lampe beschrieben, die nach dem Einschalten zu einer vorprogrammierten Zeit automatisch ausschaltet.

Elektronische Vorschaltgeräte nach dem Oberbegriff von Patentanspruch 11 sind weit verbreitet. Sie weisen eine Uhr auf, um eine Lampe in Abhängigkeit von einer mit dieser Uhr gemessenen Uhrzeit anzusteuern. Typischerweise wird die Lampe bei Einbruch der Dunkelheit eingeschaltet. In den Abendstunden soll die Lampe ausreichend stark leuchten, so dass sie in einem Normalbetrieb betrieben wird. Zu späteren Stunden in der Nacht kann die Intensität des von der Lampe abgegebenen Lichts verringert werden, die Lampe kann gedimmt werden. Bisher ist die Dauer, über die die Lampe gedimmt betrieben wird (z. B. ab einer bestimmten Uhrzeit) zu jedem elektronischen Vorschaltgerät festgelegt, also unveränderlich einprogrammiert. Es sind daher für ein und denselben Lampentyp mehrere Varianten desselben elektronischen Vorschaltgeräts bereitgestellt, die sich durch die vorgegebene Dimmdauer unterscheiden. Es muss dann zu jeder Lampe bereits bei Kopplung von einem elektronischen Vorschaltgerät festgelegt sein, wie lange die Lampe jeweils gedimmt werden soll. Dies ist störend. Auch die Bevorratung einer Mehrzahl von Varianten ein und desselben elektronischen Vorschaltgeräts ist aufwendig.

### Darstellung der Erfindung

Die Aufgabe der vorliegenden Erfindung ist es, einen Weg aufzuzeigen, wie eine Bevorratung von einer Mehrzahl von unterschiedlichen elektronischen Vorschaltgeräten vermieden werden kann und dennoch eine Wahlmöglichkeit betreffend die Dimmdauer gegeben ist.

Diese Aufgabe wird durch ein Verfahren mit den Merkmalen des Patentanspruchs 1 gelöst. Sie wird ferner bei einem elektronischen Vorschaltgerät mit den Merkmalen des Oberbegriffs des Patentanspruchs 11 durch das Merkmal des kennzeichnenden Teils des Patentanspruchs 11 gelöst. Gemäß einem weiteren Aspekt der Erfindung wird ein elektronisches Vorschaltgerät mit den Merkmalen gemäß Patentanspruch 12 bereitgestellt.

Besonders vorteilhafte Ausgestaltungen finden sich in den abhängigen Patentansprüchen.

Ein erfindungsgemäßen Verfahren zum Betreiben einer Lampe umfasst die Schritte:
a) Anschließen einer Vorrichtung an ein Paar von Eingangsanschlüssen eines elektronischen Vorschaltgeräts und hierdurch Festlegen einer jeweiligen Dimmdauer für zumindest eine vorbestimmte Situation,
b) Ansteuern der Lampe durch das elektronische Vorschaltgerät in zumindest einer vorbestimmten Situation derart, dass diese über eine Zeitspanne von einer zu dieser vorbestimmten Situation festgelegten Dimmdauer mit einer gegenüber einer Normalintensität, mit der die Lampe sonst Licht abgibt, verringerten Intensität Licht abgibt.

Es wird also durch das Anschließen einer Vorrichtung an zwei Eingangsanschlüsse des elektronischen Vorschaltgeräts dem elektronischen Vorschaltgerät die Dimmdauer zumindest mittelbar mitgeteilt. Die Dimmdauer muss dann nicht in dem elektronischen Vorschaltgerät vorab abgelegt sein. Nachfolgend kann es entsprechend der angeschlossenen Vorrichtung die Lampe dimmen.

Das elektronische Vorschaltgerät kann sich im Übrigen wie ein herkömmliches Vorschaltgerät verhalten, zu dem eine Dimmdauer dauerhaft festgelegt ist. So kann insbesondere wiederholt ein Dimmbetrieb der Lampe erfolgen, also nach einmaligem Durchführen von Schritt a), Schritt b) wiederholt durchgeführt werden. Bei in Außenleuchten eingesetzten Lampen, insbesondere auch bei Straßenleuchten, wird die Lampe insbesondere jeden Abend in Betrieb gesetzt und morgens wieder ausgeschaltet.

Die vorbestimmte Situation kann dann durch die Angabe eines Datums festgelegt sein. Die Dauer der Nacht ist bekanntlich von dem Datum abhängig. Gegebenenfalls kann auch ein Ort der Aufstellung der Lampe die Situation bestimmen.

Es ist nun möglich, zu einer Mehrzahl von Situationen jeweils eine Mehrzahl von Dimmdauern vorab in dem elektronischen Vorschaltgerät abzuspeichern. Durch das Anschließen der Vorrichtung wird dann eine generelle Auswahl für alle Situationen getroffen, z. B. können für ein bestimmtes Datum eine kurze, eine mittlere oder eine längere Dimmdauer festgelegt sein. Durch das Anschließen der Vorrichtung muss lediglich festgelegt werden, ob die jeweils kurze, die jeweils mittlere oder die jeweils längere Dimmdauer zu wählen ist. Die festgelegte Dimmdauer ist dann individuell zum jeweiligen Datum zugeordnet.

Somit erfolgt bevorzugt in Schritt a) ein Festlegen einer jeweiligen Dimmdauer für eine Vielzahl von bestimmten Tagen, wobei Schritt b) täglich an den bestimmten Tagen unter Berücksichtigung der für den jeweiligen Tag festgelegten Dimmdauer durchgeführt wird. Es kann im übrigen festgelegt sein, dass das Dimmen stets zu einer vorbestimmten Uhrzeit beginnt. Alternativ kann auch z. B. eine Uhrzeit festgelegt werden, an der die Dimmdauer jeweils zur Hälfte verstrichen sein soll. Bei längerer Dimmdauer beginnt dann der Vorgang des Dimmens früher, bei kürzerer Dimmdauer später.

Es gibt nun mehrere Möglichkeiten, wie einem Vorschaltgerät durch Anschließen einer Vorrichtung eine Information gegeben werden kann.

Elektronische Vorschaltgeräte weisen häufig eine so genannte 1 V bis 10 V-Schnittstelle auf: An den beiden Eingangsanschlüssen legt das elektronische Vorschaltgerät dann eine Spannung an. Es kann durch eine interne Schaltung mit einer jeweils vorbestimmten Genauigkeit erkennen, was für eine Vorrichtung an den Eingangsanschlüssen angeschlossen ist. Es gibt zwei Möglichkeiten: Es kann eine Spannungsquelle angeschlossen werden. Das elektronische Vorschaltgerät kann zumindest grob die so angelegte Spannung erkennen, so dass durch den Wert der so angelegten Spannung die zumindest eine Dimmdauer für eine vorbestimmte Situation festgelegt wird. Alternativ kann bei herkömmlichen elektronischen Vorschaltgeräten ein Widerstandselement angeschlossen werden, wobei durch den Widerstand dieses Elements die Dimmdauer für eine vorbestimmte Situation festgelegt wird.

Bei Anlegen einer Spannung kann eine Dimmdauer für eine vorbestimmte Situation vermittels einer mathematischen Beziehung aus dem Wert der angelegten Spannung angeleitet werden. Genauso kann bei einem angelegten Widerstandselement eine Dimmdauer für eine vorbestimmte Situation vermittels einer mathematischen Beziehung aus dem Widerstand abgeleitet werden. Das Verwenden einer mathematischen Beziehung ist insbesondere dann sinnvoll, wenn eine gewisse Präzision bei der Festlegung der Dimmdauer gewünscht ist.

Einfacher ist es, wenn die angelegte Spannung oder der angelegte Widerstand in Werteintervalle eingeteilt wird und zu solchen Werteintervallen jeweils zumindest eine Dimmdauer zugeordnet ist. Dann wird durch das Anschließen der Spannungsquelle bzw. des Widerstands die zumindest eine Dimmdauer festgelegt, die dem Intervall, in das der Wert der angelegten Spannung bzw. der angelegte Widerstand fällt, zugeordnet ist.

Sowohl bei Anschließen einer Spannungsquelle als auch bei Anschließen eines Widerstandselements kann außer der zumindest einen Dimmdauer gleichzeitig eine weitere Größe festgelegt werden. Die weitere Größe kann ebenfalls aufgrund einer mathematischen Beziehung aus dem Wert der Spannung/des Widerstands abgeleitet werden. Besonders einfach ist es jedoch, wenn vorbestimmte Werteintervalle verwendet werden. Solchen Werteintervallen kann dann sowohl zumindest eine Dimmdauer als auch eine weitere Größe zugeordnet werden. Es lassen sich mehreren Werteintervallen die gleiche Dimmdauer zuordnen, sofern sich die zugeordneten weiteren Größen voneinander unterscheiden. Durch das Anlegen einer Spannung bzw. eines Widerstands, die bzw. der in ein solches vorbestimmtes Werteintervall fällt, lässt sich sowohl die diesem Werteintervall zugeordnete Dimmdauer als auch die weitere Größe festlegen.

Bei Verwendung einer neuartigen Konstruktion eines elektronischen Vorschaltgeräts lässt sich in Schritt a) auch allgemein ein Impedanzelement anschließen, das kein reines Widerstandselement ist bzw. neben einem Widerstandselement ein induktives und/oder ein kapazitives Element umfasst. Dadurch, dass auf diese Weise eine komplexe Impedanz angeschlossen wird, können ohne weiteres zumindest zwei Größen bestimmt werden, denn ein komplexer Widerstand ist durch zwei unabhängige Angaben definierbar. Am einfachsten Fall kann man vorsehen, dass der Widerstand des Widerstandselements zumindest eine erste Größe festlegt und die Kapazität bzw. Induktivität des weiteren Elements zumindest eine zweite Größe bestimmt. Das Festlegen der ersten Größe über den Widerstand kann in der oben geschilderten Art und Weise über eine mathematische Beziehung oder Zuordnung zu Werteintervallen erfolgen. Wie oben geschildert, kann neben der ersten Größe auch eine weitere (dritte) Größe festgelegt werden.

Da für die Kapazität bzw. Induktivität ebenfalls ein Zahlenwert angebbar ist, lässt sich auch hier eine mathematische Beziehung ableiten oder lassen sich Werteintervalle definieren, so dass die zumindest zweite Größe analog zur zumindest ersten Größe festlegbar ist. Insbesondere kann durch die Kapazität bzw. Induktivität neben einer zweiten Größe auch eine weitere (vierte) Größe festgelegt werden.

Insgesamt können durch jeweilige Elemente auch mehr als zwei Größen auf einmal festgelegt werden.

Es ist möglich, dass Schritt a) umfasst, dass das Impedanzelement für die Betriebszeit des elektronischen Vorschaltgeräts dauerhaft angeschlossen bleibt. Das elektronische Vorschaltgerät kann dann gegebenenfalls jedes Mal neu die Dimmdauer auslesen. Andererseits kann ein solches Impedanzelement dann wieder verwendet werden, wenn es nur in einer Initialisierungsphase angeschlossen wird. Gleiches gilt insbesondere auch für eine Spannungsquelle als anzuschließender Vorrichtung und jede sonstige Art von Vorrichtung, die aufwendig gestaltet sein mag.

Das gemäß Patentanspruch 11 bereitgestellte erfindungsgemäße elektronische Vorschaltgerät ist dadurch gekennzeichnet, dass die Dimmdauer von außerhalb des elektronischen Vorschaltgeräts einstellbar und dann in dem elektronischen Vorschaltgerät ablegbar ist. Es ist zu beachten, dass dieses nicht mit einer Ansteuerung des elektronischen Vorschaltgeräts über Steuerbefehle gleichzusetzen ist. Vielmehr muss die Dimmdauer nur einmal eingestellt werden, und dies kann zu einem Zeitpunkt erfolgen, der weit vor Beginn des Betriebs der Lampe oder wenigstens vor dem gewünschten Einsetzen des Dimmbetriebs liegt.

Das erfindungsgemäße elektronische Vorschaltgerät gemäß Patentanspruch 12 weist zwei Eingangsanschlüsse auf sowie eine Einrichtung, welche in der Lage ist, bei Angeschlossensein einer vorbestimmten Vorrichtung an den Eingangsanschlüssen zwei Informationen auszulesen.

Eine diesbezügliche, über die beiden Eingangsanschlüsse zugängliche Schnittstelle ermöglicht daher eine komplexerere Festlegung eines Betriebszustands des elektronischen Vorschaltgeräts als es bisher möglich ist. Bisher wird über eine solche Schnittstelle lediglich eine Information mitgeteilt, z. B. eine Uhrzeit, bei der das elektronische Vorschaltgerät den Dimmbetrieb einleiten soll. Vorliegend kann als erste Information diese Uhrzeit und als zweite Information die Dimmdauer mitgeteilt werden. Somit weist bevorzugt das elektronische Vorschaltgerät sowohl die Merkmale gemäß Patentanspruch 11 als auch gemäß Patentanspruch 12 auf.

Die Möglichkeit des Auslesens von zwei Informationen ist insbesondere dann gegeben, wenn die Eingangsanschlüsse mit der Sekundärseite eines Transformators gekoppelt sind, dessen Primärseite mit Mitteln zum Beaufschlagen der Primärseite mit einem Wechselspannungssignal gekoppelt ist, wobei die Frequenz der Wechselspannung variabel durch das elektronische Vorschaltgerät einstellbar ist. Dann lässt sich an den Eingangsanschlüssen eine komplexe Impedanz anschließen und in dem elektronischen Vorschaltgerät an der Primärseite eine Reaktion ermitteln. Sollen zwei Informationen ausgelesen werden, genügt es, zu zwei Frequenzen eine Messung vorzunehmen.

Das Erfassen einer Reaktion auf der Primärseite auf das Anschließen einer Impedanz wird bevorzugt dadurch ermöglicht, dass die Primärseite des Transformators Teil einer Spannungsteileschaltung ist, mit der Mittel zum Auslesen einer Spannung gekoppelt sind. Sind dann Mittel zum Auswerten der Spannung den Mitteln zum Auslesen nachgeordnet, denen eine Information über die Frequenz des Wechselspannungssignals bekannt oder zuführbar ist, so können diese eine Information aus zumindest einem Wert einer ausgelesenen Spannung und der Frequenz der Wechselspannung ableiten, gegebenenfalls eine andere Information aus einem Wert einer ausgelesenen Spannung zu einer anderen Frequenz der Wechselspannung ableiten, gegebenenfalls auch mehrere Informationen aus mehreren solchen Messwerten zu mehreren Frequenzen ableiten.

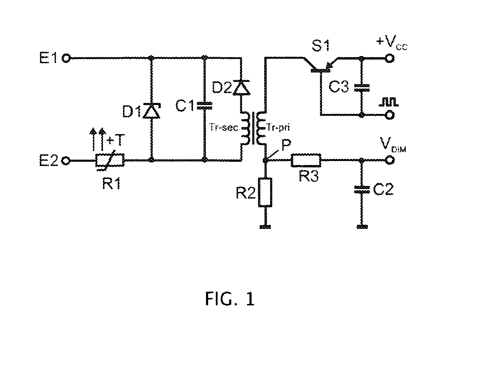

### Kurze Beschreibung der Zeichnung(en)

Im Folgenden soll die Erfindung anhand eines Ausführungsbeispiels näher erläutert werden. Es zeigt hierbei die einzige Figur
den Schaltplan für eine Schaltung in einem elektronischen Vorschaltgerät gemäß einer Ausführungsform der Erfindung.

### Bevorzugte Ausführung der Erfindung

Herzstück einer in einem elektronischen Vorschaltgerät gemäß einer Ausführungsform der vorliegenden Erfindung vorgesehenen Schaltungsanordnung zur Bereitstellung einer Schnittstelle ist ein Transformator mit seiner Primärseite Tr-pri und seiner Sekundärseite Tr-sec. Die primärseitige Wicklung Tr-pri ist in einer Reihenschaltung zwischen einem Transistor (Schalter) S1 und einem Widerstand R2 geschaltet, wobei am Kollektor des Transistors ein Potential +Vcc anliegt und der Widerstand R2 an seinem der Wicklung Tr-pri abgewandten Anschluss mit Masse gekoppelt ist. Die Basis des Transistors S1 ist mit einem Pulsgenerator gekoppelt. Der Pulsgenerator ist über einen Kondensator C3 mit dem Potentialanschluss gekoppelt, also die Basis des Transistors S1 mit ihrem Kollektor. Durch den Pulsgenerator wird bewirkt, dass die Wicklung Tr-Pri mit einer Wechselspannung beaufschlagt wird. Diese Wechselspannung sorgt auf der Sekundärseite des Transformators, also in der Wicklung Tr-sec, für das Abfallen einer Wechselspannung, die über eine Diode D2 gleichgerichtet wird, so dass eine Gleichspannung an Anschlüssen E1 und E2 abfällt. Diese Gleichspannung wird durch eine Zenerdiode D1 in ihrem Ausmaß begrenzt, ein Widerstand R1 stimmt ebenfalls die an den Anschlüssen E1 und E2 abfallende Spannung. Eine Glättung erfolgt wegen eines zwischen den Anschlüssen E1 und E2 geschalteten Kondensators C1.

Die an den Anschlüssen E1 und E2 abfallende Spannung ist von einer an sie angeschlossenen Last abhängig. Diese Last kann vorliegend ein komplexer Widerstand (Impedanz) sein, z. B. einen Widerstand und gleichzeitig einen Kondensator umfassen. Durch die Last wird das am Punkt P zwischen der primärseitigen Wicklung Tr-pri und dem Widerstand R2, also am Punkt P, anliegende Potential bestimmt. Ist parallel zum Widerstand R2 eine Reihenschaltung aus einem Widerstand R3 und einen Kondensator C2 geschaltet, so lässt sich zwischen dem Widerstand R3 und dem Kondensator C2 eine geglättete Gleichspannung V_{DIM} abgreifen. Diese Gleichspannung V_{DIM} ist von der an den Anschlüssen E1 und E2 anliegenden Impedanz abhängig. Bei einer komplexen Impedanz ist sie zugleich von der Frequenz der von dem Pulsgenerator auf die Basis des Transistors S1 gegebenen wechselnden Pulsfolge abhängig. Vorliegend soll diese Frequenz veränderlich sein. Dann lassen sich bei Anschließen einer komplexen Impedanz eine Mehrzahl von Messwerten ermitteln, zu jeder Frequenz ein Messwert. Aus diesen Messwerten kann letztlich eine anliegende Impedanz errechnet werden. Zumindest aber kann grob abgeschätzt werden, welchen Widerstand ein Widerstandselement der Impedanz und welche Kapazität ein Kondensator der Impedanz aufweist. Die grobe Abschätzung kann als Zuordnung zu Werteintervallen erfolgen. Ist nun zu solchen Werteintervallen eine Information festgelegt, sind vorliegend zwei solche Informationen festlegbar, nämlich z. B. über das Widerstandselement einerseits und das kapazitive Element andererseits, welches an den Anschlüssen E1 und E2 angeschlossen wird. Die Variabilität der Frequenz der von dem Pulsgenerator an die Basis des Transistors S1 abgegebenen Pulse ermöglicht es daher, über eine so gebildete Schnittstelle mehr als nur eine Information auszulesen.

Eine Information kann den Beginn eines Dimmbetriebs festlegen, eine andere Information die Dimmdauer.

Bei einer Abwandlung ist es möglich, zu einzelnen Werteintervallen mehr als nur eine Größe festzulegen. Lässt sich die Impedanz wegen der Variabilität der Frequenz der vom Pulsgenerator abgegebenen Pulse präzise vermessen, lassen sich sehr kleine Werteintervalle bilden. Dann kann einem ersten Werteintervall beispielsweise der Dimmbeginn 1 und die Dimmdauer 1, einem zweiten Werteintervall der Dimmbeginn 1 und die Dimmdauer 2, einem dritten Werteintervall der Dimmbeginn 2 und die Dimmdauer 1 und einem vierten Werteintervall der Dimmbeginn 2 und die Dimmdauer 2 zugeordnet werden. Kann man präzise ermitteln, in welchem Werteintervall der jeweilige Wert liegt, sind somit zwei Größen festgelegt. Dies kann auf eine beliebig große Anzahl von Größen erweitert werden, wenn die Werteintervalle immer kleiner werden.

Einem elektronischen Vorschaltgerät mit einer Schnittstelle über die Anschlüsse E1 und E2 und der in der Figur gezeigten Schaltanordnung können daher zumindest zwei Informationen, und möglicherweise sogar mehr als zwei Informationen lediglich durch Anschließen einer Impedanz an den Anschlüssen E1 und E2 mitgeteilt werden. Das elektronische Vorschaltgerät kann insbesondere eine Dimmdauer abfragen und bei einem späteren Betrieb, wenn die Impedanz insbesondere wieder von der Schnittstelle getrennt ist, eine Lampe so ansteuern, dass sie über die vorher festgelegte Dimmdauer hinweg gedimmt ist.

## Patentansprüche

1. Verfahren zum Betreiben einer Lampe, mit den Schritten:
a) Anschließen einer Vorrichtung an ein Paar von Eingangsanschlüssen (E1, E2) eines elektronischen Vorschaltgeräts und hierdurch Festlegen einer jeweiligen Dimmdauer für zumindest eine vorbestimmte Situation,
b) Ansteuern der Lampe durch das elektronische Vorschaltgerät in zumindest einer vorbestimmten Situation derart, dass die Lampe über eine Zeitspanne von einer zu dieser Situation festgelegten Dimmdauer mit einer gegenüber einer Normalintensität, mit der die Lampe sonst Licht abgibt, verringerten Intensität Licht abgibt,

2. Verfahren nach Anspruch 1, bei dem nach einmaligem Durchführen von Schritt a) Schritt b) wiederholt durchgeführt wird.

3. Verfahren nach Anspruch 2, bei dem in Schritt a) ein Festlegen einer jeweiligen Dimmdauer für eine Vielzahl von bestimmten Tagen erfolgt und Schritt b) täglich an den bestimmten Tagen unter Berücksichtigung der für den jeweiligen Tag festgelegten Dimmdauer durchgeführt wird.

4. Verfahren nach einem der Ansprüche 1 bis 3, bei dem in Schritt a) eine Spannungsquelle angeschlossen wird und durch den Wert der so angelegten Spannung die zumindest eine Dimmdauer für eine vorbestimmte Situation festgelegt wird.

5. Verfahren nach Anspruch 4, bei dem eine Dimmdauer für eine vorbestimmte Situation vermittels einer mathematischen Beziehung aus dem Wert der angelegten Spannung abgeleitet wird.

6. Verfahren nach Anspruch 4, bei dem in dem elektronischen Vorschaltgerät zu Werteintervallen für die angelegte Spannung jeweils zumindest eine Dimmdauer zugeordnet ist und somit durch das Anschließen der Spannungsquelle die zumindest eine Dimmdauer festgelegt wird, die dem Werteintervall, in das der Wert der angelegten Spannung fällt, zugeordnet ist.

7. Verfahren nach einem der Ansprüche 4 bis 6, bei dem durch das Anschließen der Spannungsquelle außer der zumindest einen Dimmdauer eine weitere Größe festgelegt wird.

8. Verfahren nach Anspruch 7 in dessen Rückbezug auf Anspruch 6, bei dem in dem elektronischen Vorschaltgeräts zu vorbestimmten Werteintervallen sowohl zumindest eine Dimmdauer als auch eine weitere Größe zugeordnet ist und somit durch das Anlegen einer Spannung, die in ein solches vorbestimmtes Werteintervall fällt, sowohl die diesem vorbestimmten Wertintervall zugeordnete zumindest eine Dimmdauer als auch die weitere Größe festgelegt wird.

9. Verfahren nach einem der Ansprüche 1 bis 3, bei dem in Schritt a) ein Impedanzelement angeschlossen wird.

10. Verfahren nach Anspruch 9, bei dem neben einem Widerstandselement ein induktives und/oder ein kapazitives Element angeschlossen wird, wobei der Widerstand des Widerstandselements zumindest eine erste Größe festlegt und die Kapazität bzw. Induktivität des kapazitiven bzw. induktiven Elements zumindest eine zweite Größe bestimmt.

11. Elektronisches Vorschaltgerät mit einer Uhr, das dazu ausgelegt ist, eine Lampe in Abhängigkeit von einer mit der Uhr gemessenen Uhrzeit anzusteuern und hierbei in zumindest einer Situation eine Abgabe von Licht durch die Lampe mit einer gegenüber einer Normalintensität, mit der die Lampe sonst Licht abgibt, verringerten Intensität über eine Zeitspanne von einer Dimmdauer zu bewirken,
**dadurch gekennzeichnet, dass**
die Dimmdauer von außerhalb des elektronischen Vorschaltgeräts einstellbar und dann in dem elektronischen Vorschaltgerät ablegbar ist.

12. Elektronisches Vorschaltgerät mit einer Uhr, das dazu ausgelegt ist, eine Lampe in Abhängigkeit von einer mit der Uhr gemessenen Uhrzeit anzusteuern und hierbei in zumindest einer Situation eine Abgabe von Licht durch die Lampe mit einer gegenüber einer Normalintensität, mit der Lampe sonst Licht abgibt, verringerten Intensität über eine Zeitspanne von einer Dimmdauer zu bewirken,
**gekennzeichnet durch**
zwei Eingangsanschlüsse und eine Einrichtung, welche in der Lage ist, bei Angeschlossensein einer vorbestimmten Vorrichtung an den Eingangsanschlüssen zwei Informationen auszulesen.

13. Elektronisches Vorschaltgerät nach Anspruch 12, bei dem die Eingangsanschlüsse (E1, E2) mit der Sekundärseite (Tr-sec) eines Transformators gekoppelt sind, dessen Primärseite (Tr-pri) mit Mitteln (V_{CC}, S1) zum Beaufschlagen der Primärseite mit einem Wechselspannungssignal gekoppelt ist, wobei die Frequenz der Wechselspannung variabel einstellbar ist.

14. Elektronisches Vorschaltgerät nach Anspruch 13,
**dadurch gekennzeichnet, dass**
die Primärseite (Tr-pri) des Transformators Teil einer Spannungsteilerschaltung ist, mit der Mittel zum Auslesen einer Spannung gekoppelt sind, wobei Mittel zum Auswerten den Mitteln zum Auslesen nachgeordnet sind und dazu ausgelegt sind, Informationen aus zumindest einem Wert einer ausgelesenen Spannung und gegebenenfalls der Frequenz der Wechselspannung abzuleiten.

## Claims

1. Method for operating a lamp, with the steps:
a) Connection of a device to a pair of input connections (E1, E2) of an electronic ballast and by this means determination of a respective dimming duration for at least one predetermined situation,
b) Activation of the lamp by the electronic ballast in at least one predetermined situation such that the lamp emits light with a reduced intensity compared with a normal intensity at which the lamp otherwise emits light over a period of a dimming duration determined for this situation,

2. Method according to claim 1, in which step b) is repeated after a one-off performance of step a).

3. Method according to claim 2, in which in step a) a respective dimming duration is determined for a large number of particular days and step b) is performed daily on the particular days with consideration being given to the dimming duration determined for the respective day.

4. Method according to one of claims 1 to 3, in which in step a) a voltage source is connected and by means of the value of the voltage applied in this way at least one dimming duration is determined for a predetermined situation.

5. Method according to claim 4, in which a dimming duration for a predetermined situation can be derived from the value of the applied voltage by means of a mathematical relationship.

6. Method according to claim 4, in which in the electronic ballast at value margins for the applied voltage at least one dimming duration is assigned and thus by means of the connection of the voltage source at least one dimming duration is determined, which is assigned to the value margin in which the value of the applied voltage occurs.

7. Method according to one of claims 4 to 6, in which by means of the connection of the voltage source apart from the at least one dimming duration an additional parameter is determined.

8. Method according to claim 7 in its reference to claim 6, in which in the electronic ballast at predetermined value margins both at least one dimming duration and one additional parameter is assigned and thus by means of the application of a voltage which occurs in such a predetermined value margin both the at least one dimming duration and the additional parameter assigned to this predetermined value margin is determined.

9. Method according to one of claims 1 to 3, in which in step a) an impedance element is connected.

10. Method according to claim 9, in which in addition to a resistance element an inductive and/or a capacitive element is connected, wherein the resistance of the resistance element determines at least one initial parameter and the capacitance or inductance of the capacitive or inductive element determines at least a second parameter.

11. Electronic ballast with a clock which is designed to activate a lamp as a function of a time measured with the clock and hereby in at least one situation to effect an emission of light by the lamp with a reduced intensity compared with a normal intensity at which the lamp otherwise emits light over a period of a dimming duration,
**characterised in that**
the dimming duration is adjustable from outside the electronic ballast and can then be stored in the electronic ballast.

12. Electronic ballast with a clock which is designed to activate a lamp as a function of a time measured with the clock and hereby in at least one situation to effect an emission of light by the lamp with a reduced intensity compared with a normal intensity with which the lamp otherwise emits light over a period of a dimming duration,
**characterised by**
two input connections and one device which is able to read out two items of information when a predetermined device is connected to the input connections.

13. Electronic ballast according to claim 12, in which the input connections (E1, E2) are connected to the secondary side (Tr-sec) of a transformer, the primary side (Tr-pri) of which is connected to means (V_{CC}, Sl) to charge the primary side with an AC voltage signal, the frequency of the AC voltage being variably adjustable.

14. Electronic ballast according to claim 13,
**characterised in that**
the primary side (Tr-pri) of the transformer is part of a voltage divider circuit to which means to read out a voltage are connected, wherein means for evaluation are subordinated to the means for reading out and are designed to derive information from at least one value of a read-out voltage and if necessary the frequency of the AC voltage.

## Revendications

1. Procédé de fonctionnement d'une lampe, comprenant les étapes :
a) raccordement d'un dispositif à une paire de bornes d'entrée (E1, E2) d'un ballast électronique et, par ce raccordement, fixation d'une durée d'atténuation respective pour au moins une situation prédéterminée,
b) commande de la lampe par le ballast électronique dans au moins une situation prédéterminée, de manière à ce que la lampe émette de la lumière avec une intensité réduite par rapport à une intensité normale avec laquelle la lampe émet habituellement de la lumière, et ce pendant une période d'une durée d'atténuation fixée pour cette situation.

2. Procédé selon la revendication 1, dans lequel, après l'exécution de l'étape a) une fois, l'étape b) est exécutée de manière répétée.

3. Procédé selon la revendication 2, dans lequel, dans l'étape a), il est fixé une durée d'atténuation respective pour une pluralité de jours déterminés et l'étape b) est exécutée quotidiennement, les jours déterminés, en tenant compte de la durée d'atténuation fixée pour le jour respectif.

4. Procédé selon l'une des revendications 1 à 3, dans lequel, dans l'étape a), une source de tension est raccordée et l'au moins une durée d'atténuation pour une situation prédéterminée est fixée par la valeur de la tension ainsi appliquée.

5. Procédé selon la revendication 4, dans lequel une durée d'atténuation pour une situation prédéterminée est dérivée de la valeur de la tension appliquée grâce à une relation mathématique.

6. Procédé selon la revendication 4, dans lequel, dans le ballast électronique, au moins une durée d'atténuation est associée à chaque fois à des intervalles de valeurs pour la tension appliquée et, ainsi, avec le raccordement de la source de tension, l'au moins une durée d'atténuation qui est associée à l'intervalle de valeurs dans lequel tombe la valeur de la tension appliquée est fixée.

7. Procédé selon l'une des revendications 4 à 6, dans lequel, avec le raccordement de la source de tension, une autre grandeur est fixée en dehors de l'au moins une durée d'atténuation.

8. Procédé selon la revendication 7 en relation avec la revendication 6, dans lequel, dans le ballast électronique, non seulement au moins une durée d'atténuation est associée à des intervalles de valeurs prédéterminés, mais une autre grandeur est également associée et, ainsi, avec l'application d'une tension qui tombe dans l'un de ces intervalles de valeurs prédéterminés, non seulement l'au moins une durée d'atténuation associée à cet intervalle de valeurs prédéterminé est fixée, mais l'autre grandeur aussi est fixée.

9. Procédé selon l'une des revendications 1 à 3, dans lequel un élément d'impédance est raccordé dans l'étape a).

10. Procédé selon la revendication 9, dans lequel, outre un élément de résistance, un élément inductif et/ou capacitif est raccordé, la résistance de l'élément de résistance déterminant au moins une première grandeur et la capacité resp. l'inductance de l'élément capacitif resp. inductif déterminant au moins une seconde grandeur.

11. Ballast électronique comprenant une horloge, qui est conçu pour commander une lampe en fonction d'une heure mesurée par l'horloge et induire ainsi, dans au moins une situation, une émission de lumière par la lampe avec une intensité réduite par rapport à une intensité normale avec laquelle la lampe émet habituellement de la lumière, et ce pendant une période d'une durée d'atténuation,
**caractérisé en ce que**
la durée d'atténuation peut être réglée de l'extérieur du ballast électronique, puis être mémorisée dans le ballast électronique.

12. Ballast électronique comprenant une horloge, qui est conçu pour commander une lampe en fonction d'une heure mesurée par l'horloge et induire ainsi, dans au moins une situation, une émission de lumière par la lampe avec une intensité réduite par rapport à une intensité normale avec laquelle la lampe émet habituellement de la lumière, et ce pendant une période d'une durée d'atténuation,
**caractérisé par**
deux bornes d'entrée et un dispositif qui est en mesure de lire deux informations lors du raccordement d'un dispositif prédéterminé aux bornes d'entrée.

13. Ballast électronique selon la revendication 12, dans lequel les bornes d'entrée (E1, E2) sont reliées au côté secondaire (Tr-sec) d'un transformateur dont le côté primaire (Tr-pri) est relié à des moyens (V_{CC}, S1) permettant d'appliquer un signal de tension alternative au côté primaire, la fréquence de la tension alternative pouvant faire l'objet d'un réglage variable.

14. Ballast électronique selon la revendication 13,
**caractérisé en ce que**
le côté primaire (Tr-pri) du transformateur fait partie d'un dispositif diviseur de tension auquel sont reliés des moyens de lecture d'une tension, des moyens d'évaluation étant montés en aval des moyens de lecture et étant conçus pour dériver des informations d'au moins une valeur d'une tension lue et, le cas échéant, de la fréquence de la tension alternative.
